# EUROPÄISCHE PATENTSCHRIFT

(11) **EP 2 420 404 B1**
(45) Veröffentlichungstag und Bekanntmachung des Hinweises auf die Patenterteilung: **08.06.2016**
(21) Anmeldenummer: 11176385.0
(22) Anmeldetag: 03.08.2011
(51) Int. Cl.: B60N 2/50, B60N 2/39, B60N 2/18, B62D 33/06

(54) **Fahrzeugschwingungsvorrichtung für Fahrzeugsitze oder Fahrzeugkabinen**
Vehicle vibration device for vehicle seats or vehicle cabins
Dispositif d'oscillation de véhicule pour sièges de véhicule ou cabines de véhicule

(30) Priorität: 18.08.2010 DE 102010034857
(43) Veröffentlichungstag der Anmeldung: 22.02.2012
(73) Patentinhaber: GRAMMER AG, 92224 Amberg (DE)
(72) Erfinder: Haller, Erwin, 92262 Birgland (DE); Kolb, Jens, 92281 Königstein (DE)
(74) Vertreter: Hannke, Christian

(56) Entgegenhaltungen:
- WO-A1-2007/058572
- DE-A1- 2 317 824
- DE-A1- 19 907 658
- US-A- 2 489 981
- US-A- 3 882 956

## Beschreibung

Die Erfindung betrifft eine Fahrzeugschwingungsvorrichtung für einen Fahrzeugsitz mit einem Fahrzeugsitzunterteil und einem gegenüber dem Fahrzeugsitzunterteil mittels mindestens einer Federeinrichtung federnd gelagerten Fahrzeugsitzoberteil gemäß dem Oberbegriff des Patentanspruches 1.

Fahrzeugschwingungsvorrichtungen insbesondere für Fahrzeugsitze sind derart ausgebildet, dass sie eine schwingende und federnde Lagerung zwischen einem Oberteil und einem Unterteil, in diesem Fall zwischen einem Fahrzeugsitzteil und einem Unterteil eines Fahrzeugsitzunterbaus, darstellen. Beispielsweise kann ein Fahrzeugsitz mit seinem Sitzteil gegenüber einem Unterteil, welches an einem Fahrzeugkabinenboden oder einer Karosserie des Fahrzeuges befestigt ist, mittels Scherenarme verbunden sein, wobei zwischen dem Oberteil und dem Unterteil zusätzlich Federungseinrichtungen und/oder Dämpfereinrichtungen angeordnet sind, um eine in vertikaler Richtung ausgerichtete Schwingung, die von außen in das System des Fahrzeugsitzes eingeleitet wird, federnd abzufangen.

Ebenso gibt es Horizontalschwingungsvorrichtungen, die dazu dienen, Schwingungen, die in horizontaler Richtung in das System des Fahrzeugsitzes eingeleitet werden, abzufedern bzw. abzudämpfen. Hierfür ist das Oberteil des Fahrzeugsitzes gegenüber dem Unterteil des Fahrzeugsitzes in horizontaler Richtung federnd gelagert und kann in horizontaler bzw. transversaler Richtung eingeleitete Schwingungen federnd abfangen.

Horizontale Schwingungseinleitungen in das System des gefederten Fahrzeugsitzes oder einer gefederten Fahrzeugkabine treten häufig dann auf, wenn ein Nutzfahrzeug, in dem dieser Fahrzeugsitz bzw. die Fahrzeugkabine angeordnet ist, mit seinen Vorderrädern in eine Mulde oder über eine Kuppe fährt und hierdurch der Fahrzeugsitz bzw. die Fahrzeugkabine kurzzeitig in Fahrzeuglängsrichtung eine Abbremsung oder eine Beschleunigung gegenüber dem restlichen Fahrzeug erfährt. Dies liegt unter anderem daran, dass das Fahrergewicht mit einer gewissen Trägheit relativ zu der Bewegung des Fahrzeuges zeitverzögert oder beschleunigt verschoben wird. Eine reine horizontale Anregung tritt bevorzugt auf, wenn man beispielsweise von einem steifen Unterbau (ungefedertes Fahrzeug) und einem horizontalen Stoß beispielsweise des Anhängers z.B. durch die Auflaufbremse ausgeht. Das Überfahren von Mulden und Steinen mit dem Vorderrad führt bevorzugt zumindest teilweise zu einer Rotationsbewegung um den Aufstandspunkt des Hinterrads mit einem Abstand r (= Abstand vom Aufstandspunkt zur Sitzfläche). Rollt dann das Hinterrad über die Unebenheit, führt dies ebenfalls zu einer rotatorischen Bewegung um die Aufstandsfläche des Vorderrads. Diesen Stoß fängt bevorzugt überwiegend die vertikale Federung ab, da diese nahezu über dem Anregungspunkt bzw. der Aufstandsfläche des Hinterrads ist

Häufig ergibt sich bei derartigen horizontal ausgerichteten Fahrzeugschwingungsvorrichtungen das Problem, dass die in das System eines Fahrzeugsitzes oder einer Fahrzeugkabine eingeleiteten Schwingungen lediglich in paralleler Richtung zu dem Fahrzeugboden, auf dem der Fahrzeugsitz angeordnet ist, federnd abgefangen werden können. Allerdings beschreibt dies ein Fahrzeug, welches beispielsweise mit seiner Vorderachse auf eine Kuppe bzw. eine erhöhte Fahrbahnunebenheit, insbesondere einen oder mehrere Steine, Äste o.ä., oder in eine Mulde fährt, das nicht ausschließlich eine kurzzeitige Veränderung seiner Geschwindigkeit nur in horizontaler Richtung erfährt, sondern vielmehr wird eine Art Kippbewegung des gesamten Fahrzeuges, wenn auch mit einer geringen Auslenkung verbunden, um eine in Fahrzeugbreitenrichtung sich erstreckende Achse stattfinden.

Bisherige Fahrzeugsitze haben bei einer derartigen Kippbewegung oder auch Nickbewegung die Möglichkeit, die eingeleiteten Schwingungen wie folgt federnd abzufangen: für den ersten Freiheitsgrad von Schwingungen in vertikaler Richtung (Z-Achse) ist eine sich bezogen auf den Fahrzeugboden vertikal sich erstreckende Fahrzeugschwingungsvorrichtung zwischen einem Fahrzeugsitzoberteil und einem Fahrzeugsitzunterteil vorhanden. Zusätzlich können Dämpfungseinrichtungen in vertikaler Richtung eingerichtet sein. Für die, bezogen auf den Fahrzeugboden, in längshorizontaler Richtung eingeleiteten Schwingungen sind gemäß dem zweiten Freiheitsgrad (X-Achse) in Fahrzeuglängsachsenrichtung die so genannten horizontalen Fahrzeugschwingungsvorrichtungen vorhanden. Für den dritten Freiheitsgrad (Y-Achse) können in Fahrzeugbreitenrichtung in horizontaler Richtung wirkende Fahrzeugschwingungsvorrichtungen vorhanden sein.

Somit bestehen bisher drei getrennt voneinander zu betrachtende Fahrzeugschwingungsvorrichtungen für insgesamt drei Freiheitsgrade entlang der X-Achse, Y-Achse und Z-Achse eines Fahrzeuges. Die für eine Schwingungsdämpfung von eingeleiteten Schwingungen erforderlichen Federwege werden immer in Richtung der Fahrzeugachsen geführt. Herkömmlicherweise sind derartige Federwege in vertikaler Richtung auf ca. 100 mm in ihrer Ausdehnung begrenzt. Bei längs- und seitenhorizontal wirkenden Federwegen hängt dies von der Konstruktion und sicherheitstechnischen Erfordernissen der Umgebung ab, wie es durch die Erreichbarkeit von Bedienelementen und Scherenelementenstellungen vorgegeben sein kann. Derartige horizontal wirkende Federwege sind üblicherweise mit +/- 25 mm sowohl in X-Achse als auch Y-Achse beschränkt. Eine Kipp- oder Nickbewegung des Fahrzeuges kann durch derartige getrennt voneinander angeordnete Fahrzeugschwingungsvorrichtungen aufgrund der festgelegten Freiheitsgrade der einzelnen Fahrzeugschwingungsvorrichtungen in ihren Federwegen nicht oder nur unzureichend ausgeglichen werden.

Die Druckschrift WO 2007/058572 A1 offenbart eine Federungsvorrichtung für ein Fahrzeugteil. Diese befindet sich oberhalb eines Fahrzeugrahmens und weist zumindest einen Verbindungsmechanismus auf.

Die DE 2 317 824 A1 beschreibt einen Sitz für Schlepper und andere Fahrzeuge. Dieser Sitz ist im Verhältnis zum Fahrzeug verschiebar angeordnet, um die Einwirkungen der Wankbewegungen des Fahrzeugs auf den Fahrer zu mildern.

Die Druckschrift US 2,489,981 offenbart eine Sitzfederung für Fahrzeuge gemäß dem Oberbegriff des Anspruchs 1. Die Federung soll bei Fahrten über unebenes Gelände die Stöße auf den Fahrersitz aufnehmen.

US 3,882,956 offenbart eine Federung für eine Fahrzeugkabine. Hierfür weist das Fahrzeug einen Rahmen auf, an welchem die Fahrzeugkabine befestigt ist. Die Fahrzeugkabine ist dabei schwenkbar gelagert.

Die DE 199 07 658 A1 offenbart einen Sitz für ein Fahrzeug. Der Sitz weist einen Sitzteil und eine Rückenlehne auf, wobei eine Einrichtung zur Dämpfung von Schwingungen des Sitzteils und/oder der Rückenlehne um eine Querachse des Sitzes vorgesehen ist

Demzufolge liegt der vorliegenden Erfindung die Aufgabe zugrunde, eine Fahrzeugschwingungsvorrichtung für einen Fahrzeugsitz zur Verfügung zu stellen, welche einen höheren Sitzkomfort der das Fahrzeug fahrenden Person bei Durchfahren einer Mulde oder einer Kuppe zur Verfügung stellt.

Diese Aufgabe wird gemäß den Merkmalen des Patentanspruches 1 gelöst.

Kerngedanke der Erfindung ist es, dass bei einer Fahrzeugschwingungsvorrichtung für einen Fahrzeugsitz mit einem Fahrzeugsitzunterteil und einem gegenüber dem Fahrzeugsitzunterteil mittels mindestens einer Federungseinrichtung federnd gelagerten Fahrzeugsitzoberteil das Fahrzeugsitzoberteil derart gegenüber dem Fahrzeugsitzunterteil gelagert ist, dass es bei Auftreten von Schwingungen zwischen dem Fahrzeugsitzoberteil und dem Fahrzeugsitzunterteil um eine reelle sich in Fahrzeugbreitenrichtung erstreckende Achse schwenkbar ist.

Durch die Anordnung einer derartigen Achse bzw. der Ausbildung der Lagerung des Fahrzeugsitzoberteils gegenüber dem Fahrzeugsitzunterteil derart, dass eine Schwenkbewegung möglich ist, kann vorteilhaft erreicht werden, dass bei einem Durchfahren eines Schlagloches oder bei einem Überfahren einer Kuppe die durch das Fahrzeug durchgeführte Nick- oder Kippbewegung bzw. eine Art Rollbewegung von der Fahrzeugschwingungsvorrichtung ausgeglichen werden kann. Denn sofern das Fahrzeug beispielsweise über eine Kuppe fährt und somit mit den Vorderrädern nach oben ausgelenkt wird, wobei zugleich eine kurzzeitige Abbremsung in Fahrzeuglängsrichtung, also in horizontaler Richtung, stattfindet, findet eine Art Kipp- oder Nickbewegung des Fahrzeuges statt, die durch die Schwenkbewegung des Oberteils und Unterteils des Fahrzeugsitzes oder einer Fahrzeugkabine entgegengesetzt ausgeglichen werden könnte. Dies kann mittels der Federungseinrichtung federnd und mittels einer Dämpfungseinrichtung dämpfend unterstützt werden, so dass die eingeleitete kippartige Bewegung schwingend abgedämpft werden kann. Beim Überfahren einer Überhöhung oder eines Steines wird das Vorderrad bzw. das Vorderteil des Fahrzeuges somit bevorzugt nach oben gestoßen, woraus eine Drehbewegung des Fahrzeugs um die Aufstandsfläche des Hinterreifens resultieren kann. Die Massenträgheit des Fahrers möchte aber den Fahrzeugsitz translatorisch weiterbewegen. Hier ist z.B. ein rotatorischer Freiheitsgrad hilfreich, so dass dem Fahrer die Rotation des Fahrzeugs durch das Steigen des Fahrzeugvorderteils nicht aufgezwungen wird.

Durch die Festlegung einer reellen Achse, um die diese Schwenkbewegung stattfindet und die zugleich diejenige gedachte Achse sein kann, um welche sich der Fahrzeugrumpf bei Überfahren der Kuppe oder Durchfahren der Mulde rotatorisch bewegt, können sogenannte rotative Freiheitsgrade geschaffen werden.

Eine derartige reelle Achse ist unterhalb des Fahrzeugsitzoberteils angeordnet, so dass das Fahrzeugsitzoberteil eine gegenüber der Nick- oder Kippbewegung des Fahrzeuges entgegengesetzte Schwenkbewegung durchführen kann.

Die Schwenkbewegungen des schwenkbaren Oberteils sind mittels der Federungseinrichtung mit einer der Schwenkbewegung entgegenwirkenden Federkraft zur Schwingungsdämpfung beaufschlagbar. Somit werden die in das System eines Fahrzeugsitzes oder einer Fahrzeugkabine eingeleiteten Schwingungen federnd reduziert und ggf. abgedämpft. Das Oberteil kann vorzugsweise ein Fahrzeugsitzoberteil und das Unterteil kann vorzugsweise ein mit einem Fahrzeugkarosserieteil oder -rahmenteil und/oder einem Fahrzeugkabinenteil verbundenes Fahrzeugsitzunterteil sein.

Ebenso kann das Oberteil eine Fahrzeugkabine und das Unterteil ein Fahrzeugrahmenteil oder ein Fahrzeugkarosserieteil oder ein mit diesen Teilen verbundenes Teil darstellen.

Das Fahrzeugsitzoberteil weist ein Sitzteil und eine Rückenlehne auf.

Das Fahrzeugsitzoberteil ist erfindungsgemäß mittels mindestens einem sich im Wesentlichen in Fahrzeughöhenrichtung erstreckenden Schwenkarms mit dem Fahrzeugsitzunterteil derart verbunden, dass das Fahrzeugsitzoberteil sich in Vorwärts- und Rückwärtsrichtung sowie in eine Auf- und Abwärtsrichtung mittels einer Schwenkbewegung bewegt. Dies entspricht einer einfachen möglichen Ausführungsform der vorliegenden Erfindung zur Durchführung der Schwenkbewegung des Oberteils gegenüber dem Unterteil.

Die reelle Achse ist bei Auftreten der Schwingungen in transversaler Richtung verschiebbar. Dies bedeutet, dass gemäß einer bevorzugten Ausführungsform die Achse zusätzlich eine horizontale Verschiebung durchführen kann, um beispielsweise hierdurch einleitende Schwingungen, die eine starke Komponente in horizontaler Richtung aufweisen, mittels einer Federeinrichtung abfangen zu können. Dies kann auch dadurch erreicht werden, dass bei Auftreten einer Schwingung das Oberteil gegenüber dem Unterteil mittels einer zusätzlichen horizontalen Fahrzeugschwingungsvorrichtung bzw. einer Fahrzeugschwingungsvorrichtung, die parallel zu dem Fahrzeugboden und einer Fahrzeugachse verläuft, angeordnet wird.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigt:

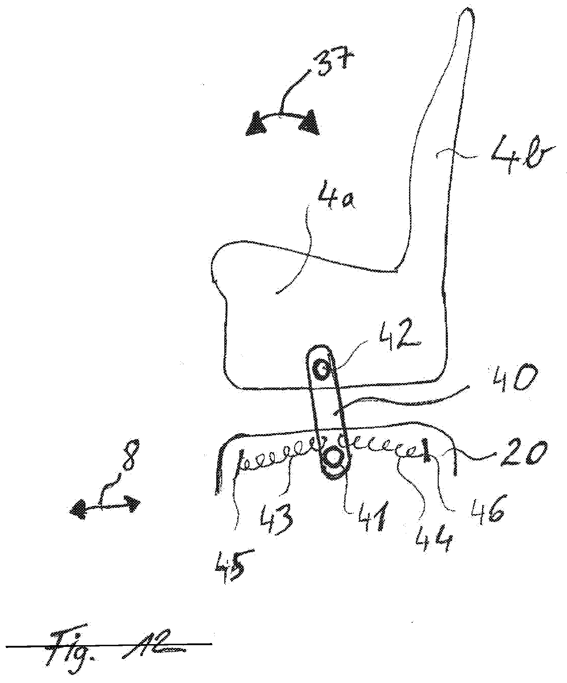

- Fig. 1: in einer Seitendarstellung eine schematische Skizze einer erfindungsgemäßen Konstruktion zur Durchführung einer Schwenkbewegung mit einer Fahrzeugschwingungsvorrichtung gemäß der Erfindung.

In Fig. 1 wird in einer Seitendarstellung ein Fahrzeugsitz mit einer möglichen Konstruktion zur Lagerung des Fahrzeugsitzoberteils gegenüber einem Fahrzeugsitzunterteil 20 für die Durchführung einer Schwenkbewegung in erfindunsgemäßer Weise gezeigt. Der Fahrzeugsitz mit einem Sitzteil 4a und 4b ist mittels mindestens einem Schwenkhebel 40, der in den Bereichen 41 und 42 mit dem Fahrzeugsitzoberteil einerseits und dem Fahrzeugsitzunterteil 20 anderseits verbunden ist, gegenüber dem Unterteil gelagert. Die Bereiche 41, 42 sind Schwenkachsen. Der Schwenkhebel weist links- und rechtsseitig schematisch angedeutete Federelemente 43 und 44 auf, die endseitig an ortsfesten Elementen 45 und 46 befestigt sind. Diese Federelemente 43 und 44 lassen den Schwenkhebel 40 nach vorne und nach hinten verschwenken, sobald eine Schwenkbewegung 37 notwendig ist. Eine derartige Schwenkbewegung ist notwendig, wenn das hier nicht dargestellte Fahrzeug, in dem der Fahrzeugsitz angeordnet ist, eine Nickbewegung nach vorne oder nach hinten durchführt und der Fahrzeugsitz mittels einer Schwenkbewegung ausgleichend entgegengeschwenkt werden soll. Diese Schwenkbewegung wird durch die eingeleitete Schwingung, welche durch die Nickbewegung des Fahrzeuges erzeugt wird, hervorgerufen. Gegen diese Schwenkbewegung wirken der Federelemente 43 und 44, um die Schwingung des Fahrzeugsitzes zu reduzieren.

### Bezugszeichenliste

- 4a: Sitzteil
- 4b: Rückenlehne
- 8: Fahrzeuglängsrichtung
- 20: Fahrzeugsitzunterteil
- 37: Schwenkbewegung
- 40: Schwenkhebel
- 41, 42: Bereiche
- 43, 44: Federelemente
- 45, 46: ortsfeste Elemente

## Patentansprüche

1. Fahrzeugsitz (4, 4a, 4b) umfassend eine Fahrzeugsitzschwingungsvorrichtung mit einem Fahrzeugsitzunterteil (20) und einem gegenüber dem Fahrzeugsitzunterteil (20) mittels mindestens einer Federungseinrichtung federnd gelagertem Fahrzeugsitzoberteil (4a, 4b),
wobei
das Fahrzeugsitzoberteil (4a, 4b) derart gegenüber dem Fahrzeugsitzunterteil (20) gelagert ist, dass es bei Auftreten von Schwingungen zwischen dem Fahrzeugsitzoberteil (4a, 4b) und dem Fahrzeugunterteil (20) um eine reelle sich in Fahrzeugbreitenrichtung erstreckende Achse (41) schwenkbar ist,
die Achse (41) bezüglich des Fahrzeuges festgelegt ist, wobei die Achse (41) direkt im Fahrzeugsitz (4, 4a, 4b) untergebracht ist, wobei
- das Fahrzeugsitzoberteil (4a, 4b) mittels mindestens einem sich im Wesentlichen in Fahrzeughöhenrichtung (9) erstreckenden Schwenkarm (40) mit dem Fahrzeugsitzunterteil (20) derart verbunden ist, dass das Fahrzeugsitzoberteil (4a, 4b) sich in Vorwärts- und Rückwärtsrichtung (8) sowie in eine Auf- und Abwärtsrichtung (9) bewegt,
- der Schwenkhebel (40) in Bereichen (41) und (42) mit dem Fahrzeugsitzoberteil einerseits und dem Fahrzeugsitzunterteil (20) anderseits verbunden ist und gegenüber dem Unterteil gelagert ist,
**dadurch gekennzeichnet, dass**
die Bereiche (41, 42) Schwenkachsen sind, die beide mit dem Schwenkarm (40) verbunden sind, und wobei
der Schwenkarm (40) links- und rechtsseitig, bezogen auf die Vorwärts- und Rückwärtsrichtung (8), angeordnete Federelemente (43) und (44) aufweist, die endseitig an ortsfesten Elementen (45) und (46) befestigt sind.

2. Fahrzeugsitz nach dem vorhergehenden Anspruch,
**dadurch gekennzeichnet, dass**
das Fahrzeugsitzunterteil mit einem Fahrzeugkarosserieteil oder -rahmen und/oder mit einem Fahrzeugkabinenteil (21) verbindbar ist.

3. Fahrzeugsitz nach Anspruch 2,
**dadurch gekennzeichnet, dass**
das Fahrzeugsitzoberteil ein Sitzteil (4a) mit einer Rückenlehne (4b) umfasst.

## Claims

1. Vehicle seat (4, 4a, 4b) comprising a vehicle seat vibration device, having a lower vehicle seat part (20) and an upper vehicle seat part (4a, 4b) which is resiliently mounted with respect to the vehicle seat lower part (20) by means of at least one suspension device, the vehicle seat upper part (4a, 4b) being mounted relative to the lower vehicle seat part (20) such that, when vibrations occur between the vehicle seat upper part (4a, 4b) and the lower vehicle seat part (20), said vehicle seat upper part is pivotable about a real axis (41) extending in the vehicle width direction, the axis (41) being fixed relative to the vehicle, the axis (41) being located directly in the vehicle seat (4, 4a, 4b),
- the vehicle seat upper part (4a, 4b) being connected to the lower vehicle seat part (20) by means of at least one pivot arm (40) extending substantially in the vehicle height direction (9), such that the vehicle seat upper part (4a, 4b) moves in a forwards and a backwards direction (8) and in an upwards and a downwards direction (9),
- the pivot lever (40) being connected in regions (41) and (42) to the vehicle seat upper part on one side and to the lower vehicle seat part (20) on the other side and being mounted relative to the lower part, **characterised in that**
the regions (41, 42) are swivel axes which are both connected to the pivot arm (40), and the pivot arm (40) comprising spring elements (43) and (44) which are arranged on the left and right hand sides, relative to the forwards and backwards direction (8), which spring elements are fastened by their ends to stationary elements (45) and (46).

2. Vehicle seat according to the preceding claim, **characterised in that** the lower vehicle seat part can be connected to a vehicle body part or frame and/or to a vehicle cab part (21).

3. Vehicle seat according to claim 2, **characterised in that**
the vehicle seat upper part comprises a seat part (4a) having a backrest (4b).

## Revendications

1. Siège de véhicule (4, 4a, 4b) comprenant un dispositif d'oscillation de siège de véhicule avec une partie inférieure de siège de véhicule (20) et une partie supérieure de siège de véhicule (4a, 4b) logée de manière suspendue par rapport à la partie inférieure de siège de véhicule (20) au moyen d'au moins un dispositif de suspension, la partie supérieure du siège de véhicule (4a, 4b) étant logée par rapport à la partie inférieure du siège de véhicule (20) de façon à ce que, lors de l'apparition de vibrations entre la partie supérieure du siège de véhicule (4a, 4b) et la partie inférieure du siège de véhicule (20), elle puisse être pivotée autour d'un axe (41) réel s'étendant dans la direction de la largeur du véhicule,
l'axe (41) étant fixée par rapport au véhicule, l'axe (41) étant directement logé dans le siège du véhicule (4a, 4a, 4b)
- la partie supérieure du siège de véhicule (4a, 4b) étant reliée, au moyen d'un bras pivotant (40) s'étendant essentiellement dans la direction de la hauteur du véhicule (9), avec la partie inférieure du siège du véhicule (20) de façon à ce que la partie supérieure du siège de véhicule (4a, 4b) se déplace vers l'avant et vers l'arrière (8) et vers le haut et vers le bas (9),
- le levier pivotant (40) est relié, dans des zones (41) et (42), d'une part avec la partie supérieure du siège de véhicule et d'autre part avec la partie inférieure du siège de véhicule (20) et est logé par rapport à la partie inférieure, **caractérisé en ce que** les zones (41, 42) sont des axes pivotants, qui sont tous les deux reliés avec le bras pivotant (40) et le bras pivotant (40) comprend des éléments de ressorts (43, 44) disposés à gauche et à droite par rapport à la direction avant et arrière (8), qui sont fixés, au niveau de l'extrémité, à des éléments fixes (45) et (46).

2. Siège de véhicule selon la revendication précédente, **caractérisé en ce que** la partie inférieure du siège de véhicule peut être reliée avec une partie de carrosserie ou un châssis de véhicule et/ou une partie de cabine de véhicule (21).

3. Siège de véhicule selon la revendication 2, **caractérisé en ce que** la partie supérieure du siège de véhicule comprend une partie d'assise (4a) avec un dossier (4b).
